# EUROPEAN PATENT APPLICATION

(11) **EP 4 310 802 A1**
(43) Date of publication of application: **24.01.2024**
(21) Application number: 22774317.6
(22) Date of filing: 24.03.2022
(51) Int. Cl.: G07B 15/06

(54) **ROAD TOLL COLLECTION METHOD AND APPARATUS**

(30) Priority: 25.03.2021 CN 202110321982
(71) Applicant: Huawei Technologies Co., Ltd., Longgang Shenzhen, Guangdong 518129 (CN)
(72) Inventor: CHEN, Yao, Shenzhen, Guangdong 518129 (CN); LI, Mingchao, Shenzhen, Guangdong 518129 (CN)
(74) Representative: Pfenning, Meinig & Partner mbB
(86) International application number: PCT/CN2022/082818
(87) International publication number: WO 2022/199663

(57) **Abstract**

A road toll method and apparatus are provided, to prevent another vehicle from running in front of a vehicle in a cut-in manner after a roadside unit controls a bar of a gate to open for release. This can resolve a problem of opening the bar by mistake caused by disordered traffic of vehicles in a non-open road tolling scenario, and network resources can be reduced. The method includes: A vehicle-mounted device in a vehicle receives transaction voucher information from a roadside unit after the vehicle pays a toll of a road (401), where the transaction voucher information indicates that the vehicle pays the toll; the vehicle-mounted device sends a pass request message when the vehicle does not pass through a gate of the road and a distance between the vehicle and the gate is less than a first threshold (402), where the pass request message includes the transaction voucher information; and the vehicle-mounted device stops sending the pass request message after the vehicle passes through the gate (405).

## Description

### CROSS-REFERENCE TO RELATED APPLICATIONS

This application claims priority to Chinese Patent Application No. 202110321982.4, filed with the China National Intellectual Property Administration on March 25, 2021 and entitled "ROAD TOLL METHOD AND APPARATUS", which is incorporated herein by reference in its entirety.

### TECHNICAL FIELD

This application relates to the field of intelligent vehicle technologies, and in particular, to a road toll method and aparatus.

### BACKGROUND

An electronic toll collection (electronic toll collection, ETC) system is a mature toll collection technology. Currently, there are dedicated ETC channels at an entrance and exit of a highway. ETC-based communication is implemented based on a 5.8 GHz dedicated short-range communication (dedicated short-range communication, DSRC) technology, which has the following disadvantages: A communication anti-interference capability is weak, and a communication distance is short. Generally, a communication radius is 10 m to 30 m. In addition, a coverage area is small. Consequently, a passing speed of a vehicle in a transaction status is limited. For example, a transaction success rate of the vehicle at a speed of at least 120 km/h cannot be ensured. Therefore, another alternative solution is also considered in the industry. For example, highway toll collection is implemented based on an LTE-V2X communication technology. The LTE-V2X communication technology has advantages of a long communication distance, a strong communication anti-interference capability, and the like, to support communication of a vehicle moving at a high speed. In addition, reliability of implementing toll collection in an LTE-V2X communication manner is higher than that of implementing toll collection in an ETC toll collection manner.

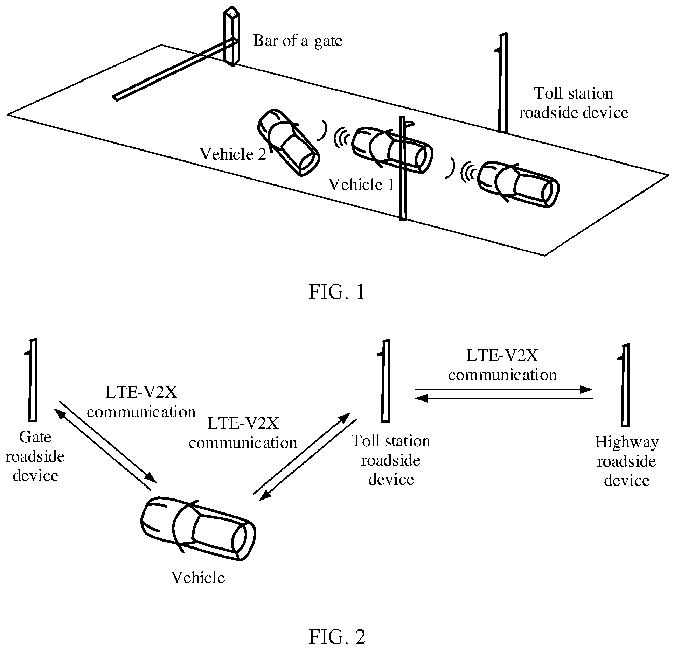

Currently, in a method for implementing toll collection in the LTE-V2X communication manner, in a non-open road tolling (namely, tolling before passing) scenario, after a toll station roadside device receives payment from a vehicle, a bar of a gate is opened. Consequently, a case in which the bar is opened by mistake may occur. For example, in a scenario shown in FIG. 1, a vehicle 1 that is far away from the bar of the gate completes payment in the LTE-V2X communication manner, and then the bar of the gate is opened. However, at this moment, a vehicle 2 that does not complete payment runs in front of the vehicle 1 in a cut-in manner. In this case, the vehicle 2 may directly leave the toll station without completing the payment, causing a problem of opening the bar by mistake caused by disordered traffic of vehicles.

### SUMMARY

This application provides a road toll method and apparatus, to resolve a problem of opening a bar by mistake caused by disordered traffic of vehicles in a non-open road tolling scenario.

According to a first aspect, this application provides a road toll method. The method may be applied to a vehicle-mounted device end in a vehicle. For example, the method may be performed by a road toll apparatus at the vehicle-mounted device end. The method includes: A vehicle-mounted device in a vehicle receives transaction voucher information from a roadside unit after the vehicle pays a toll of a road, where the transaction voucher information indicates that the vehicle pays the toll; the vehicle-mounted device sends a pass request message when the vehicle does not pass through a gate of the road and a distance between the vehicle and the gate is less than a first threshold, where the pass request message includes the transaction voucher information; and the vehicle-mounted device stops sending the pass request message after the vehicle passes through the gate.

According to the method, the vehicle-mounted device in the vehicle sends the pass request message including the transaction voucher information, so that the roadside unit can learn, based on the transaction voucher information, that the vehicle pays the toll. In addition, when the vehicle-mounted device sends the pass request message, the distance between the vehicle and the gate is less than the first threshold, it indicates that the vehicle is very close to the gate, to prevent another vehicle from running in front of the vehicle in a cut-in manner after the roadside unit controls a bar of a gate to open for release. This can resolve a problem of opening the bar by mistake caused by disordered traffic of vehicles in a non-open road tolling scenario. In addition, the vehicle-mounted device stops sending the pass request message after the vehicle passes through the gate, so that network resources can be reduced.

In a possible implementation, that the vehicle-mounted device sends a pass request message includes: The vehicle-mounted device periodically sends the pass request message.

In a possible implementation, the pass request message further includes location information of the vehicle. In this way, the roadside unit can accurately determine the distance between the vehicle and the gate.

In a possible implementation, that the vehicle-mounted device stops sending the pass request message includes: The vehicle-mounted device obtains, based on a location of the vehicle relative to the gate, a determining result indicating that the vehicle passes through the gate, and then stops sending the pass request message based on the determining result. In this way, the vehicle-mounted device may stop sending the pass request message after ensuring that the vehicle passes through the gate.

In a possible implementation, that the vehicle-mounted device stops sending the pass request message includes: The vehicle-mounted device receives a release indication message from the roadside unit, where the release indication message indicates that the vehicle is released by the gate, and then the vehicle-mounted device stops sending the pass request message based on the release indication message. In this way, the vehicle-mounted device may stop sending the pass request message after ensuring that the vehicle is released by the gate.

In a possible implementation, before the vehicle-mounted device receives the release indication message from the roadside unit, the vehicle-mounted device sends a pass message. The pass message includes, but is not limited to, vehicle information or a transaction voucher code. The pass message indicates that the vehicle-mounted device passes through the gate. In this way, the roadside unit can determine, based on the pass message, that the vehicle passes through the gate, to control the bar of the gate to close.

In a possible implementation, the roadside unit includes a first roadside device. That a vehicle-mounted device in a vehicle receives transaction voucher information from a roadside unit includes: The vehicle-mounted device in the vehicle receives the transaction voucher information from the first roadside device. That the vehicle-mounted device sends a pass request message includes: The vehicle-mounted device sends the pass request message to the first roadside device.

In a possible implementation, the roadside unit includes a first roadside device and a second roadside device. That a vehicle-mounted device in a vehicle receives transaction voucher information from a roadside unit includes: The vehicle-mounted device in the vehicle receives the transaction voucher information from the first roadside device. That the vehicle-mounted device sends a pass request message includes: The vehicle-mounted device sends the pass request message to the second roadside device. For example, the first roadside device may be disposed near a road toll station, and the second roadside device may be disposed near the gate. According to this implementation, the road toll method may be applied to a vehicle running at a high speed. The vehicle may first complete payment of the toll of the road in a signal coverage area of the first roadside device, and then send the pass request message to the second roadside device when the distance between the vehicle and the gate is less than the first threshold. This can resolve a problem of opening the bar by mistake caused by disordered traffic of vehicles in non-open road tolling scenario, and the vehicle can maintain a high speed for passing through the gate.

According to a second aspect, this application provides a road toll method. The method may be applied to a roadside unit in a vehicle. For example, the method may be performed by a road toll apparatus of the roadside unit. The method includes: receiving a pass request message sent by a vehicle, where the pass request message includes transaction voucher information, and the transaction voucher information indicates that the vehicle pays a toll of a road; obtaining a determining result indicating that the vehicle does not pass through a gate of the road and a distance between the vehicle and the gate is less than a first threshold; and generating a release control signal based on the transaction voucher information and the determining result, where the release control information is used to enable the vehicle to pass through the gate.

According to the method, the roadside unit may learn, based on the transaction voucher information, that the vehicle pays the toll, and then generate the release control signal based on the determining result indicating that the distance between the vehicle and the gate is less than the first threshold, to prevent another vehicle from running in front of the vehicle in a cut-in manner after the roadside unit controls a bar of the gate to open for release. This can resolve a problem of opening the bar by mistake caused by disordered traffic of vehicles in a non-open road tolling scenario.

In a possible implementation, before the receiving a pass request message sent by a vehicle, the method further includes: sending the transaction voucher information to the vehicle after the vehicle pays the toll, where the transaction voucher information indicates that the vehicle pays the toll.

In a possible implementation, the pass request message further includes location information of the vehicle, and the obtaining a determining result indicating that the vehicle does not pass through a gate of the road and a distance between the vehicle and the gate is less than a first threshold includes: determining the determining result based on the location information and a location of the gate. In this way, the roadside unit can accurately determine the determining result.

In a possible implementation, the obtaining a determining result indicating that the vehicle does not pass through a gate of the road and a distance between the vehicle and the gate is less than a first threshold includes: determining the determining result based on a sensing result of the vehicle by a sensing device of the roadside unit.

In a possible implementation, the pass request message further includes proximity indication information indicating that the vehicle is to arrive at the gate, and the obtaining a determining result indicating that the vehicle does not pass through a gate of the road and a distance between the vehicle and the gate is less than a first threshold includes: obtaining the determining result based on the proximity indication information.

In a possible implementation, after the generating a release control signal, the method further includes: sending a release indication message to the vehicle, where the release indication message indicates that the vehicle is released by the gate. In this way, the vehicle-mounted device in the vehicle can determine that the vehicle is released by the gate, and then the vehicle can leave the gate as soon as possible.

Corresponding to any road toll method in the first aspect and the second aspect, this application further provides a communication apparatus. The communication apparatus may be any transmit end device or receive end device that performs data transmission in a wireless manner, for example, a vehicle-mounted device or a road toll apparatus of a roadside unit. In a communication process, a transmit end device and a receive end device are opposite to each other. In some communication processes, the communication apparatus may serve as the vehicle-mounted device or a communication chip that may be used in the vehicle-mounted device. In some communication processes, the communication apparatus may serve as the road toll apparatus of the roadside unit or a communication chip that may be used in the road toll apparatus of the roadside unit.

According to a third aspect, a communication apparatus is provided. The communication apparatus includes a receiving unit, a sending unit, and a processing unit, to perform any one of the first aspect and the implementations of the first aspect. The receiving unit is configured to execute a function related to receiving, and the sending unit is configured to execute a function related to sending. In a design, the communication apparatus is a communication chip, and the receiving unit and the sending unit may be an input/output circuit or port of the communication chip.

In another design, the receiving unit may be a receiver or a receiver machine, and the sending unit may be a transmitter or a transmitter machine.

Optionally, the communication apparatus further includes modules that may be configured to perform any one of the first aspect and the implementations of the first aspect.

According to a fourth aspect, a communication apparatus is provided. The communication apparatus includes a communication unit and a processing unit, to perform any one of the second aspect and the implementations of the second aspect. The communication unit is configured to perform functions related to sending and receiving. Optionally, the communication unit includes a receiving unit and a sending unit. In a design, the communication apparatus is a communication chip, and the communication unit may be an input/output circuit or port of the communication chip.

In another design, the communication unit may be a transmitter and a receiver, or the communication unit may be a transmitter machine and a receiver machine.

Optionally, the communication apparatus further includes modules that may be configured to perform any one of the second aspect and the implementations of any road toll method of the second aspect.

According to a fifth aspect, a communication apparatus is provided. The communication apparatus may be the vehicle-mounted device in the foregoing vehicle or the road toll apparatus of the foregoing roadside unit, and includes a processor and a memory. Optionally, the communication apparatus further includes a transceiver. The memory is configured to store a computer program or instructions. The processor is configured to invoke the computer program or the instructions from the memory and run the computer program or the instructions. When the processor executes the computer program or the instructions in the memory, the communication apparatus is enabled to perform any one of the first aspect, the second aspect, and the implementations of any communication method of the first aspect and the second aspect.

Optionally, there are one or more processors, and there are one or more memories.

Optionally, the memory may be integrated with the processor, or the memory and the processor are separately disposed.

Optionally, the transceiver may include a transmitter machine (transmitter) and a receiver machine (receiver).

According to a sixth aspect, a communication apparatus is provided. The communication apparatus includes a processor. The processor is coupled to a memory, and may be configured to perform the method according to any one of the first aspect, the second aspect, and the possible implementations of the first aspect and the second aspect. Optionally, the communication apparatus further includes the memory. Optionally, the communication apparatus further includes a communication interface, and the processor is coupled to the communication interface.

In an implementation, the communication apparatus is a vehicle-mounted device. When the communication apparatus is a vehicle-mounted device, the communication interface may be a transceiver or an input/output interface. Optionally, the transceiver may be a transceiver circuit. Optionally, the input/output interface may be an input/output circuit.

In another implementation, the communication apparatus is a road toll apparatus of a roadside unit. When the communication apparatus is a road toll apparatus of a roadside unit, the communication interface may be a transceiver or an input/output interface. Optionally, the transceiver may be a transceiver circuit. Optionally, the input/output interface may be an input/output circuit.

In still another implementation, the communication apparatus is a chip or a chip system. When the communication apparatus is a chip or a chip system, the communication interface may be an input/output interface, an interface circuit, an output circuit, an input circuit, a pin, a related circuit, or the like on the chip or the chip system. The processor may alternatively be a processing circuit or a logic circuit.

According to a seventh aspect, a system is provided. The system includes the vehicle-mounted device in the foregoing vehicle and the road toll apparatus of the foregoing roadside unit.

According to an eighth aspect, a computer program product is provided. The computer program product includes a computer program (which may also be referred to as code or instructions). When the computer program is run, a computer is enabled to perform the method according to any one of the first aspect and the possible implementations of the first aspect, or a computer is enabled to perform the method according to any one of the second aspect and the possible implementations of the second aspect.

According to a ninth aspect, a computer-readable storage medium is provided. The computer-readable medium stores a computer program (which may also be referred to as code or instructions). When the computer program is run on a computer, the computer is enabled to perform the method according to any one of the first aspect and the possible implementations of the first aspect, or the computer is enabled to perform the method according to any one of the second aspect and the possible implementations of the second aspect.

According to a tenth aspect, a chip system is provided. The chip system may include a processor. The processor is coupled to a memory, and may be configured to perform the method according to any one of the first aspect, the second aspect, and the possible implementations of the first aspect and the second aspect. Optionally, the chip system further includes the memory. The memory is configured to store a computer program (which may also be referred to as code or instructions). The processor is configured to invoke the computer program from the memory and run the computer program, so that a device in which the chip system is installed performs the method according to any one of the first aspect, the second aspect, and the possible implementations of the first aspect and the second aspect.

In a specific implementation process, the foregoing processing apparatus may be a chip, an input circuit may be an input pin, an output circuit may be an output pin, and a processing circuit may be a transistor, a gate circuit, a trigger, various logic circuits, or the like. An input signal received by the input circuit may be received and input by, for example, but not limited to, a receiver. A signal output by the output circuit may be output to, for example, but not limited to, a transmitter and transmitted by the transmitter. In addition, the input circuit and the output circuit may be a same circuit, where the circuit is used as the input circuit and the output circuit at different moments. Specific implementations of the processor and the various circuits are not limited in embodiments of this application.

### BRIEF DESCRIPTION OF DRAWINGS

FIG. 1 is a schematic diagram of a scenario to which an embodiment of this application is applicable;
FIG. 2 is a schematic diagram of a possible system architecture to which an embodiment of this application is applicable;
FIG. 3 is a schematic diagram of a structure of a vehicle-mounted device to which an embodiment of this application is applicable;
FIG. 4 is a schematic flowchart of a road toll method according to an embodiment of this application;
FIG. 5 is a schematic flowchart of a road toll method according to an embodiment of this application;
FIG. 6 is a schematic diagram of a communication apparatus according to an embodiment of this application;
FIG. 7 is a schematic diagram of a communication apparatus according to an embodiment of this application;
FIG. 8 is a schematic diagram of a communication apparatus according to an embodiment of this application; and
FIG. 9 is a schematic diagram of a communication apparatus according to an embodiment of this application.

### DESCRIPTION OF EMBODIMENTS

The following describes the technical solutions in embodiments of this application with reference to the accompanying drawings in embodiments of this application. It is clear that the described embodiments are merely some but not all embodiments of this application.

In embodiments of this application, a vehicle may communicate with another object based on a vehicle-to-everything wireless communication technology (for example, vehicle-to-everything (V2X)). For example, communication between the vehicle and a roadside device may be implemented based on a vehicle-to-infrastructure wireless communication technology (for example, vehicle-to-vehicle (V2I)). Vehicle-to-infrastructure communication may be performed based on a long term evolution (long term evolution, LTE) communication technology-based, a 5th generation (5th generation, 5G) mobile communication technology-based, a future mobile communication technology-based, or the like-based vehicle-to-everything wireless communication technology. In the following embodiments, an example in which communication between the vehicle and the roadside device is performed by using LTE-V2X is used for description.

A road toll method in embodiments of this application may be applied to a plurality of road toll scenarios, for example, a highway toll collection scenario or a parking lot toll collection scenario. A specific application scenario is not limited in this application. In the following embodiments, an example in which the road toll method is applied to the highway toll collection scenario is used for description.

FIG. 2 is a schematic diagram of a possible architecture of a communication system to which an embodiment of this application is applicable. As shown in FIG. 2, the communication system may include a roadside unit and a vehicle. A vehicle-mounted device in the vehicle may communicate with the roadside unit based on LTE-V2X. The vehicle-mounted device is, for example, also referred to as an on-board unit (on-board unit, OBU), and is placed in the vehicle or installed in the vehicle. For example, the vehicle-mounted device may be disposed below a central display screen in the vehicle. For another example, the vehicle-mounted device is disposed at a rearview mirror, and may be powered by a power supply system of the vehicle. A specific location of the vehicle-mounted device is not limited in this embodiment of this application. The vehicle-mounted device may be responsible for uniquely identifying a vehicle identity, binding payment accounts such as a bank card and a WeChat account, reading/writing an existing ETC pass card, satellite positioning, and the like.

The roadside unit may include one or more roadside devices. For example, the roadside unit includes a plurality of roadside devices. As shown in FIG. 2, the roadside unit includes a highway roadside device, a toll station roadside device, and a gate roadside device.

The highway roadside device may be disposed beside each of road sections of a plurality of paths of a highway. The plurality of paths mean that there are two or more driving paths between two toll stations. The highway roadside device may include a first road side unit (road side unit, RSU), configured to communicate with the vehicle-mounted device based on LTE-V2X when the vehicle passes by, and obtain location information of the vehicle.

The toll station roadside device may be disposed near a toll station of a highway, and the toll station roadside device may include a second RSU. The second RSU may communicate with the first RSU included in the highway roadside device, to obtain the location information of the vehicle in a driving process, and then obtain a driving path. In addition, the second RSU may communicate with the vehicle-mounted device based on LTE-V2X when the vehicle passes by, to complete a highway toll transaction process.

The gate roadside device may be disposed near a bar of a gate, and the gate roadside device may include a third RSU. The third RSU may communicate with the vehicle-mounted device based on LTE-V2X, and receive transaction voucher information sent by the vehicle-mounted device. The transaction voucher information indicates that the vehicle pays a toll. For example, the transaction voucher information includes a transaction voucher code. In this way, the roadside unit determines, based on the transaction voucher information sent by the vehicle, that the vehicle arriving at the bar of the gate pays the toll, and then controls the bar of the gate to open, so that the vehicle can leave the toll station. In addition, the third RSU may further obtain the location information of the vehicle by communicating with the vehicle-mounted device, to determine a distance of the vehicle relative to the gate. In some other embodiments, the third RSU may alternatively communicate, based on LTE-V2X, with the second RSU included in the toll station roadside device, to obtain the location information and/or the transaction voucher information of the vehicle.

In the foregoing embodiment, any two roadside devices (for example, any two highway roadside devices, or a highway roadside device and a toll station roadside device, or a toll station roadside device and a gate roadside device) may perform wireless communication based on LTE-V2X. In some other embodiments, any two roadside devices may alternatively perform communication by using an optical fiber connection.

In some other embodiments, the toll station roadside device and the gate roadside device may alternatively be integrated into one roadside device, and the roadside device is disposed near a toll station, to implement functions of the toll station roadside device and the gate roadside device.

The following describes a structure of the vehicle-mounted device.

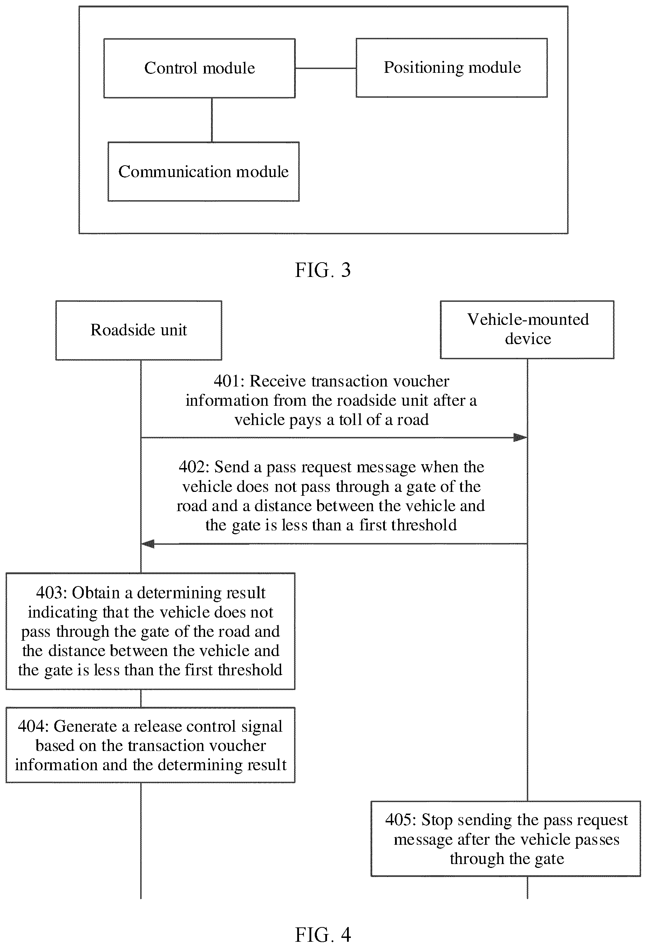

As shown in FIG. 3, the vehicle-mounted device may include a control module, a communication module, and a positioning module. The control module is mainly responsible for coordinating each module, and is responsible for control, storage, read/write, and the like. The communication module has communication functions including LTE-V2X, Bluetooth, wireless fidelity (wireless fidelity, Wi-Fi), near field communication (near field communication, NFC), and the like, and is mainly responsible for communicating with the first RSU in the highway roadside device, the second RSU in the toll station roadside device, and the third RSU in the gate roadside device, reading/writing an ETC pass card, and communicating with another device. The positioning module is configured to communicate with a BeiDou satellite and/or a global positioning system (global positioning system, GPS) communication device, to obtain the location information of the vehicle.

For ease of understanding embodiments of this application, the following first describes some terms in embodiments of this application.

Vehicle-to-everything (vehicle-to-everything, V2X) is a technology used for vehicle-to-vehicle (vehicle-to-vehicle, V2V), vehicle-to-roadside infrastructure (vehicle-to-infrastructure, V2I), and vehicle-to-pedestrian (vehicle-to-pedestrian, V2P) direct communication, and vehicle-to-network (vehicle-to-network, V2N) communication.

V2I means a connection between a vehicle and an infrastructure. I herein includes transportation facilities such as traffic lights, a bus station, a utility pole, a building, a motorway interchange, a tunnel, and a roadblock. Communication between the infrastructure and the vehicle is implemented by using V2I communication without affecting a vehicle-mounted sensor.

The terms "system" and "network" in embodiments of this application may be interchangeably used. "At least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be in a singular form or a plural form.

In addition, unless otherwise specified, ordinal numbers such as "first" and "second" mentioned in embodiments of this application are used to distinguish between a plurality of objects, but are not used to limit priorities or importance of the plurality of objects. For example, a first roadside device and a second roadside device are merely used to distinguish between different roadside devices, but do not indicate different priorities, importance, or the like of the two roadside devices.

Currently, in a method for implementing toll collection based on the LTE-V2X communication manner, in a non-open road tolling scenario, after the toll station roadside device receives payment from the vehicle, the bar of the gate is opened. Consequently, a case in which the bar is opened by mistake may occur. For example, in a scenario shown in FIG. 1, a vehicle 1 that is far away from the bar of the gate completes payment in the LTE-V2X communication manner, and then the bar of the gate is opened. However, at this moment, a vehicle 2 that does not complete payment runs in front of the vehicle 1 in a cut-in manner. In this case, the vehicle 2 may directly leave the toll station without completing the payment, causing a problem of opening the bar by mistake caused by disordered traffic of the vehicles.

To resolve the problem, this application provides a road toll method, to resolve a problem of opening the bar by mistake caused by disordered traffic of vehicles in the non-open road tolling scenario.

### Embodiment 1

FIG. 4 is a schematic flowchart of a road toll method according to an embodiment of this application. As shown in FIG. 4, the method includes the following steps.

Step 401: A vehicle-mounted device in a vehicle receives transaction voucher information from a roadside unit after the vehicle pays a toll of a road, where the transaction voucher information indicates that the vehicle pays the toll.

The following describes the case in which the vehicle pays the toll of the road.

For example, the vehicle pays a toll of a highway. When approaching or arriving at a toll station of the highway, the vehicle may perform a transaction with the roadside unit in an LTE-V2X communication manner, to complete payment of the toll of the highway. During specific implementation, when the vehicle runs on the highway, the roadside unit may obtain related information such as a driving path of the vehicle, a driving mileage, and a charging rate of a road section that the vehicle passes through, then calculate the toll, and feed back fee deduction information (including at least the toll) to the vehicle-mounted device. The vehicle-mounted device receives the fee deduction information, and implements automatic fee deduction by using a bank card bound to the vehicle or an ETC pass card, to complete payment of the toll of the highway. After the vehicle pays the toll, the roadside unit may send the transaction voucher information to the vehicle, so that the vehicle determines that the toll is paid.

In this embodiment of this application, the transaction voucher information may include vehicle information and payment information. The vehicle information is information that can uniquely identify the vehicle, and the vehicle information may include at least one of the following: a license plate number, a vehicle identification number, and an engine number. The payment information may include the toll, information that the vehicle enters an entrance of the highway, information that the vehicle leaves an exit of the highway, and the like, and may further include other information. This is not limited herein.

Step 402: The vehicle-mounted device sends a pass request message when the vehicle does not pass through a gate of the road and a distance between the vehicle and the gate is less than a first threshold, where the pass request message includes the transaction voucher information. Correspondingly, the roadside unit receives the pass request message sent by the vehicle-mounted device in the vehicle.

Herein, a specific value of the first threshold is not limited in this application, and may be set based on an actual situation. For example, the first threshold is set to a length of a vehicle. For another example, there is a lane with obstacles on both sides in front of a bar of the gate. Generally, when a head of a vehicle reaches an entrance of the lane with obstacles on both sides of the lane, another vehicle cannot run in front of the vehicle in a cut-in manner. In this case, the first threshold may be set to a length of the lane with obstacles on both sides of the lane. For another example, the first threshold may be set to a sum of a length of a lane with obstacles on both sides of the lane and a length of a vehicle.

In a possible implementation, the vehicle-mounted device periodically sends the pass request message. Correspondingly, the roadside unit receives the pass request message periodically sent by the vehicle-mounted device in the vehicle.

In this embodiment of this application, specific duration of a periodicity in which the vehicle-mounted device periodically sends the pass request message is not limited. During specific implementation, an algorithm that represents a relationship between a sending frequency and each of different vehicle models and different vehicle speeds may be established, to determine, based on the algorithm, a sending frequency of the pass request message based on a vehicle model and/or a vehicle speed of the vehicle. For example, a higher vehicle speed indicates a higher sending frequency. This is not limited in this application.

Step 403: The roadside unit obtains a determining result indicating that the vehicle does not pass through the gate of the road and the distance between the vehicle and the gate is less than the first threshold.

In step 403, there are a plurality of possible implementations in which the roadside unit obtains the determining result indicating that the vehicle does not pass through the gate of the road and the distance between the vehicle and the gate is less than the first threshold, which are separately described below.

In a possible implementation a1, the pass request message further includes location information of the vehicle, and the roadside unit may determine, based on the location information and a location of the gate, the determining result indicating that the vehicle does not pass through the gate of the road and the distance between the vehicle and the gate is less than the first threshold.

During specific implementation, the vehicle-mounted device may obtain the location information of the vehicle by using GPS positioning or BeiDou satellite positioning. Therefore, the submeter-level location information may be obtained in this manner. Certainly, in this embodiment of this application, the location information of the vehicle may alternatively be obtained in another manner. This is not limited in this application.

For example, the vehicle-mounted device periodically sends the pass request message, and the pass request message includes the location information of the vehicle and the transaction voucher information. The roadside unit may determine the determining result based on the location information of the vehicle in the pass request message that is periodically received.

For example, the vehicle-mounted device obtains location information A of the vehicle in a first periodicity, and sends a pass request message 1 to the roadside unit. The pass request message 1 includes the location information A and the transaction voucher information. After receiving the pass request message 1, the roadside unit determines, based on the transaction voucher information, that the vehicle pays the toll, and determines, based on the location information A, whether the vehicle passes through the gate of the road and the distance between the vehicle and the gate is less than the first threshold. If the vehicle passes through the gate of the road and the distance between the vehicle and the gate is less than the first threshold, step 404 and step 405 are performed; or if the vehicle does not pass through the gate of the road and the distance between the vehicle and the gate is not less than the first threshold, a determining result continues to be obtained in a next periodicity. Herein, an example in which the result in the first periodicity is no is used for description. The vehicle-mounted device obtains location information B of the vehicle in a second periodicity, and sends a pass request message 2 to the roadside unit. The pass request message 2 includes the location information B and the transaction voucher information. After receiving the pass request message 1, the roadside unit determines, based on the transaction voucher information, that the vehicle pays the toll, and determines, based on the location information B, whether the vehicle passes through the gate of the road and the distance between the vehicle and the gate is less than the first threshold. If the vehicle passes through the gate of the road and the distance between the vehicle and the gate is less than the first threshold, step 404 is performed; or if the vehicle does not pass through the gate of the road and the distance between the vehicle and the gate is not less than the first threshold, a determining result continues to be obtained in a next periodicity until the determining result in step 403 is obtained. In other words, the vehicle does not pass through the gate of the road and the distance between the vehicle and the gate is less than the first threshold.

In a possible implementation a2, the roadside unit determines, based on a sensing result of the vehicle by a sensing device of the roadside unit, the determining result indicating that the vehicle does not pass through the gate of the road and the distance between the vehicle and the gate is less than the first threshold. It should be noted that the sensing device of the roadside unit may be disposed in a roadside device, or may be disposed in an independent device near the gate. If the sensing device is an independent device, the sensing device may forward the sensing result to the roadside device.

In an example, the sensing device of the roadside unit may include, for example, a photographing apparatus, for example, a high-definition camera. The photographing apparatus may photograph a vehicle near the gate, and then send image data to the roadside unit. After receiving the image data, the roadside unit determines, based on the image data, whether the vehicle passes through the gate of the road and the distance between the vehicle and the gate. For example, the roadside unit determines, by using an image recognition technology, whether the vehicle passes through the gate of the road and the distance between the vehicle and the gate.

In another example, the sensing device of the roadside unit may include, for example, a first NFC apparatus, and the vehicle-mounted device includes a second NFC apparatus. When the distance between the vehicle and the gate is less than the first threshold, the second NFC apparatus sends a first message to the first NFC apparatus, where the first message indicates that a distance between the vehicle and the bar of the gate is less than a preset threshold. In this way, provided that the first NFC apparatus receives the first message, it may be determined that the distance between the vehicle and the bar of the gate is less than the preset threshold.

In still another example, the sensing device of the roadside unit may include, for example, a radar apparatus. The roadside unit may receive a second message sent by the radar apparatus, where the second message includes a distance between the vehicle and the radar apparatus. Then, the roadside unit determines the distance between the vehicle and the bar of the gate based on the distance between the vehicle and the radar apparatus and a distance between the radar apparatus and the bar of the gate, to obtain the determining result.

In a possible implementation a3, the pass request message further includes proximity indication information indicating that the vehicle is to arrive at the gate, and the roadside unit may obtain, based on the proximity indication information, the determining result indicating that the vehicle does not pass through the gate of the road and the distance between the vehicle and the gate is less than the first threshold.

Step 404: The roadside unit generates a release control signal based on the transaction voucher information and the determining result, where the release control information is used to enable the vehicle to pass through the gate.

In a possible implementation, the roadside unit may further send a release indication message to the vehicle after generating the release control signal, where the release indication message indicates that the vehicle is released by the gate. In this way, the vehicle-mounted device in the vehicle can determine that the vehicle is released by the gate, and then the vehicle can leave the gate as soon as possible.

Step 405: The vehicle-mounted device stops sending the pass request message after the vehicle passes through the gate.

In step 405, there are a plurality of possible implementations in which the vehicle-mounted device stops sending the pass request message after the vehicle passes through the gate, which are separately described below.

In a possible implementation b 1, the vehicle-mounted device obtains, based on a location of the vehicle relative to the gate, a determining result indicating that the vehicle passes through the gate, and the vehicle-mounted device stops sending the pass request message based on the determining result. In this way, the vehicle-mounted device may stop sending the pass request message after ensuring that the vehicle passes through the gate.

In a possible implementation b2, the vehicle-mounted device receives the release indication message from the roadside unit, where the release indication message indicates that the vehicle is released by the gate, and then the vehicle-mounted device stops sending the pass request message based on the release indication message. In this way, the vehicle-mounted device may stop sending the pass request message after ensuring that the vehicle is released by the gate.

In some other embodiments, before the vehicle-mounted device receives the release indication message from the roadside unit, the vehicle-mounted device may further send a pass message. The pass message includes, but is not limited to, the vehicle information or a transaction voucher code. The pass message indicates that the vehicle-mounted device passes through the gate. In this way, the roadside unit can determine, based on the pass message, that the vehicle passes through the gate, to control the bar of the gate to close.

In this embodiment of this application, the vehicle-mounted device in the vehicle sends the pass request message including the transaction voucher information, so that the roadside unit can learn, based on the transaction voucher information, that the vehicle pays the toll. In addition, when the vehicle-mounted device sends the pass request message, the distance between the vehicle and the gate is less than the first threshold, it indicates that the vehicle is very close to the gate, to prevent another vehicle from running in front of the vehicle in a cut-in manner after the roadside unit controls a bar of a gate to open for release. This can resolve a problem of opening the bar by mistake caused by disordered traffic of vehicles in a non-open road tolling scenario. In addition, the vehicle-mounted device stops sending the pass request message after the vehicle passes through the gate, so that network resources can be reduced.

In Embodiment 1, the road toll solution is implemented through interaction between the roadside unit and the vehicle-mounted device in the vehicle. The roadside unit may be a roadside device, for example, referred to as a first roadside device. For example, the first roadside device may be the toll station roadside device in the communication system shown in FIG. 2. In this case, the roadside unit in the foregoing method embodiment may be replaced with the first roadside device. For specific implementations, refer to the descriptions in Embodiment 1. In another optional implementation, the roadside unit may alternatively include two roadside devices, for example, include a first roadside device and a second roadside device. For example, the first roadside device may be the toll station roadside device in the communication system shown in FIG. 2, and the second roadside device may be the gate roadside device in the communication system shown in FIG. 2. The following describes in detail, based on Embodiment 2, a specific implementation process of three-party interaction between the first roadside device, the second roadside device, and the vehicle-mounted device in the vehicle.

### Embodiment 2

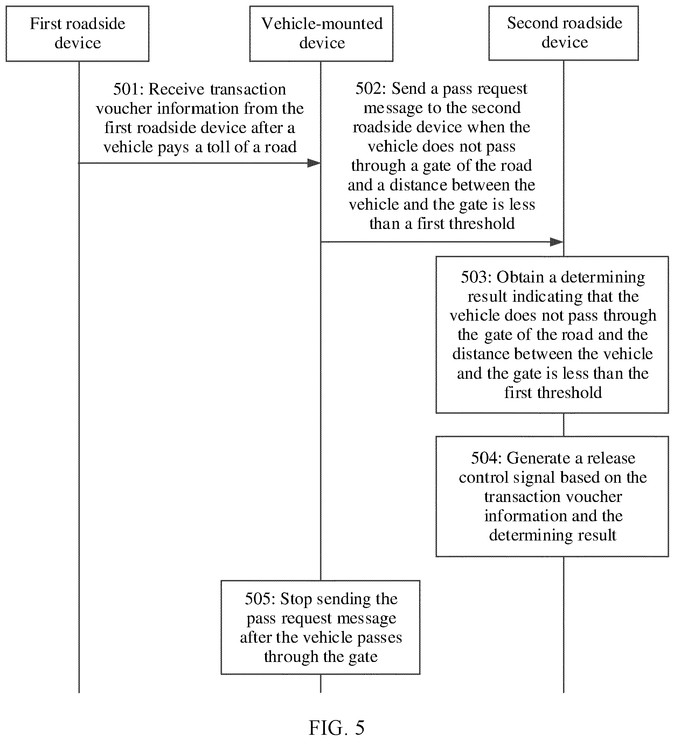

FIG. 5 is an example of a schematic flowchart corresponding to a road toll method according to Embodiment 2 of this application. As shown in FIG. 5, the method includes the following steps.

Step 501: A vehicle-mounted device in a vehicle receives transaction voucher information from a first roadside device after the vehicle pays a toll of a road, where the transaction voucher information indicates that the vehicle pays the toll.

In a possible implementation, the first roadside device may further send the transaction voucher information to the vehicle after the vehicle pays the toll.

Herein, for a specific implementation of step 501, refer to related content of step 401 in Embodiment 1. Details are not described herein again.

Step 502: The vehicle-mounted device sends a pass request message to a second roadside device when the vehicle does not pass through a gate of the road and a distance between the vehicle and the gate is less than a first threshold, where the pass request message includes the transaction voucher information. Correspondingly, the second roadside device receives the pass request message sent by the vehicle-mounted device in the vehicle.

In a possible implementation, the vehicle-mounted device periodically sends the pass request message to the second roadside device.

Herein, for a specific implementation of step 502, refer to related content of the step in Embodiment 1. Details are not described herein again.

Step 503: The second roadside device obtains a determining result indicating that the vehicle does not pass through the gate of the road and the distance between the vehicle and the gate is less than the first threshold.

Herein, there are a plurality of possible implementations in which the second roadside device obtains the determining result indicating that the vehicle does not pass through the gate of the road and the distance between the vehicle and the gate is less than the first threshold, which are separately described below.

In a possible implementation c1, the pass request message further includes location information of the vehicle, and the second roadside device may determine, based on the location information and a location of the gate, the determining result indicating that the vehicle does not pass through the gate of the road and the distance between the vehicle and the gate is less than the first threshold. For a specific implementation of the possible implementation c1, refer to related content of the possible implementation a1 in Embodiment 1. Details are not described herein again.

In a possible implementation c2, the second roadside device determines, based on a sensing result of the vehicle by a sensing device of a roadside unit, the determining result indicating that the vehicle does not pass through the gate of the road and the distance between the vehicle and the gate is less than the first threshold. It should be noted that the sensing device of the roadside unit may be disposed in the first roadside device, may be disposed in the second roadside device, or may be disposed in an independent device near the gate. If the sensing device of the roadside unit is an independent device or is disposed in the first roadside device, the sensing device of the roadside unit may forward the sensing result to the second roadside device. For a specific implementation of the possible implementation c2, refer to related content of the possible implementation a2 in Embodiment 1. Details are not described herein again.

In a possible implementation c3, the pass request message further includes proximity indication information indicating that the vehicle is to arrive at the gate, and the second roadside device may obtain, based on the proximity indication information, the determining result indicating that the vehicle does not pass through the gate of the road and the distance between the vehicle and the gate is less than the first threshold.

Step 504: The second roadside device generates a release control signal based on the transaction voucher information and the determining result, where the release control information is used to enable the vehicle to pass through the gate.

In a possible implementation, the second roadside device may further send a release indication message to the vehicle after generating the release control signal, where the release indication message indicates that the vehicle is released by the gate. In this way, the vehicle-mounted device in the vehicle can determine that the vehicle is released by the gate, and then the vehicle can leave the gate as soon as possible.

Step 505: The vehicle-mounted device stops sending the pass request message to the second roadside device after the vehicle passes through the gate.

In step 505, there are a plurality of possible implementations in which the vehicle-mounted device stops sending the pass request message to the second roadside device after the vehicle passes through the gate, which are separately described below.

In a possible implementation d1, the vehicle-mounted device obtains, based on a location of the vehicle relative to the gate, a determining result indicating that the vehicle passes through the gate, and the vehicle-mounted device stops sending the pass request message based on the determining result. In this way, the vehicle-mounted device may stop sending the pass request message to the second roadside device after ensuring that the vehicle passes through the gate.

In a possible implementation d2, the vehicle-mounted device receives the release indication message from a roadside unit, where the release indication message indicates that the vehicle is released by the gate, and then the vehicle-mounted device stops sending the pass request message to the second roadside device based on the release indication message. In this way, the vehicle-mounted device may stop sending the pass request message to the second roadside device after ensuring that the vehicle is released by the gate.

In some other embodiments, before the vehicle-mounted device receives the release indication message from the second roadside device, the vehicle-mounted device may further send a pass message to the second roadside device. The pass message includes, but is not limited to, the vehicle information or a transaction voucher code. The pass message indicates that the vehicle-mounted device passes through the gate. In this way, the second roadside device can determine, based on the pass message, that the vehicle passes through the gate, to control the bar of the gate to close.

In this embodiment of this application, the road toll method may be applied to a vehicle running at a high speed. The vehicle may first complete payment of the toll of the road in a signal coverage area of the first roadside device, and then send the pass request message to the second roadside device when the distance between the vehicle and the gate is less than the first threshold. This indicates that the vehicle is very close to the gate, to prevent another vehicle from running in front of the vehicle in a cut-in manner after the second roadside device controls the bar of the gate to open for release. This can resolve a problem of opening the bar by mistake caused by disordered traffic of vehicles in non-open road tolling scenario, and the vehicle can maintain a high speed for passing through the gate. In addition, the vehicle-mounted device stops sending the pass request message after the vehicle passes through the gate, so that network resources can be reduced.

It should be noted that, names of the foregoing information are merely examples. With evolution of communication technologies, the name of any foregoing information may be changed. However, regardless of how the names of the information change, provided that meanings of the information are the same as those of the information in this application, the information falls within the protection scope of this application.

The foregoing mainly describes the solutions provided in this application from a perspective of interaction between network elements. It may be understood that, to implement the foregoing functions, each network element includes a corresponding hardware structure and/or software module for executing each function. A person of ordinary skill in the art should easily be aware that, in combination with the examples described in embodiments disclosed in this specification, units and algorithm steps may be implemented by hardware or a combination of hardware and computer software in the present application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present application.

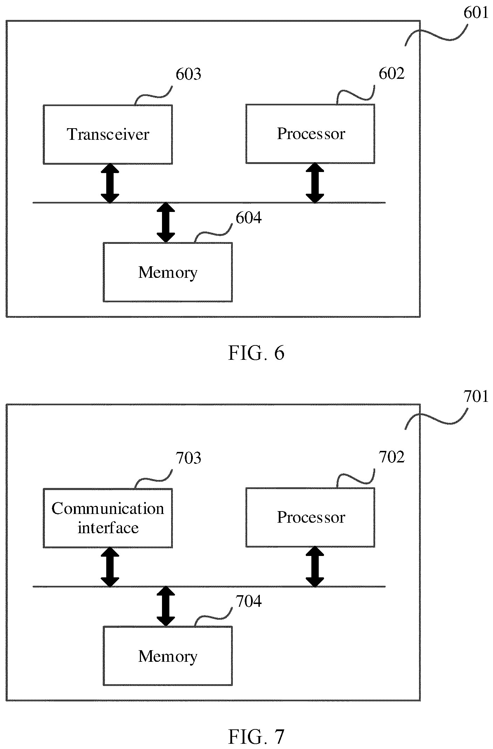

According to the foregoing methods, FIG. 6 is a schematic diagram of a structure of a communication apparatus according to an embodiment of this application. As shown in FIG. 6, the communication apparatus may be a road toll apparatus (or a first roadside device or a second roadside device) of a roadside unit or a vehicle-mounted device. Alternatively, the communication apparatus may be a chip or a circuit, for example, a chip or a circuit that may be disposed in a road toll apparatus (or a first roadside device or a second roadside device) of a roadside unit, or a chip or a circuit that may be disposed in a vehicle-mounted device.

Further, the communication apparatus 601 may further include a bus system. A processor 602, a memory 604, and a transceiver 603 may be connected through the bus system.

It should be understood that the processor 602 may be a chip. For example, the processor 602 may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller unit (microcontroller unit, MCU), a programmable controller (programmable logic device, PLD), or another integrated chip.

In an implementation process, steps in the foregoing methods may be completed by a hardware integrated logic circuit in the processor 602 or instructions in a form of software. The steps in the methods disclosed with reference to embodiments of this application may be directly performed and completed by a hardware processor, or may be performed and completed by a combination of hardware and software modules in the processor 602. The software module may be located in a mature storage medium in the art, for example, a random access memory, a flash memory, a read-only memory, a programmable read-only memory, an electrically erasable programmable memory, or a register. The storage medium is located in the memory 604. The processor 602 reads information in the memory 604, and completes the steps in the foregoing methods in combination with hardware of the processor.

It should be noted that the processor 602 in this embodiment of this application may be an integrated circuit chip, and has a signal processing capability. In an implementation process, the steps in the foregoing method embodiments may be completed by a hardware integrated logic circuit in the processor or instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the method disclosed with reference to embodiments of this application may be directly performed and completed by a hardware decoding processor, or may be performed and completed by a combination of hardware and software modules in a decoding processor. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory, and completes the steps in the foregoing methods in combination with hardware of the processor.

It may be understood that the memory 604 in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the systems and methods described in this specification is intended to include, but not limited to, these memories and any memory of another proper type.

When the communication apparatus 601 corresponds to the vehicle-mounted device in the foregoing method, the communication apparatus 601 may include the transceiver 603 and the memory 604. Optionally, the communication apparatus 601 further includes the processor 602. The memory 604 is configured to store instructions. The processor 602 is configured to execute the instructions stored in the memory 604, to implement the related solution of the vehicle-mounted device in the method that corresponds to any one or more items and that is shown in FIG. 4 or FIG. 5.

When the communication apparatus 601 implements the related solution of the vehicle-mounted device in the method that corresponds to any one or more items and that is shown in FIG. 4, the transceiver 603 is configured to: receive transaction voucher information from a roadside unit after a vehicle pays a toll of a road, where the transaction voucher information indicates that the vehicle pays the toll; send a pass request message when the vehicle does not pass through a gate of the road and a distance between the vehicle and the gate is less than a first threshold, where the pass request message includes the transaction voucher information; and stop sending the pass request message after the vehicle passes through the gate.

In a possible implementation, the transceiver 603 is specifically configured to periodically send the pass request message.

In a possible implementation, the pass request message further includes location information of the vehicle.

In a possible implementation, the processor 602 is specifically configured to obtain, based on a location of the vehicle relative to the gate, a determining result indicating that the vehicle passes through the gate. The transceiver 603 is specifically configured to control, based on the determining result, a communication unit to stop sending the pass request message.

In a possible implementation, the transceiver 603 is specifically configured to: receive a release indication message from the roadside unit, where the release indication message indicates that the vehicle is released by the gate; and stop sending the pass request message based on the release indication message.

When the communication apparatus 601 corresponds to the road toll apparatus of the roadside unit in the foregoing method, the communication apparatus 601 may include the processor 602, the transceiver 603, and the memory 604. The memory 604 is configured to store instructions. The processor 602 is configured to execute the instructions stored in the memory 604, to implement the related solution of the road toll apparatus of the roadside unit in the method that corresponds to any one or more items and that is shown in FIG. 4 or FIG. 5.

When the communication apparatus 601 implements the related solution of the road toll apparatus of the roadside unit in the method that corresponds to any one or more items and that is shown in FIG. 4, the transceiver 603 is configured to receive a pass request message sent by a vehicle, where the pass request message includes transaction voucher information, and the transaction voucher information indicates that the vehicle pays a toll of a road; and the processor 602 is configured to obtain a determining result indicating that the vehicle does not pass through a gate of the road and a distance between the vehicle and the gate is less than a first threshold; and generate a release control signal based on the transaction voucher information and the determining result, where the release control information is used to enable the vehicle to pass through the gate.

In a possible implementation, before the receiving a pass request message sent by a vehicle, the transceiver 603 is further configured to send the transaction voucher information to the vehicle after the vehicle pays the toll, where the transaction voucher information indicates that the vehicle pays the toll.

In a possible implementation, the pass request message further includes location information of the vehicle, and the processor 602 is specifically configured to determine the determining result based on the location information and a location of the gate.

In a possible implementation, the processor 602 is specifically configured to determine the determining result based on a sensing result of the vehicle by a sensing device of the roadside unit.

In a possible implementation, the pass request message further includes proximity indication information indicating that the vehicle is to arrive at the gate, and the processor 602 is specifically configured to obtain the determining result based on the proximity indication information.

In a possible implementation, the transceiver 603 is further configured to send a release indication message to the vehicle after the release control signal is generated, where the release indication message indicates that the vehicle is released by the gate.

When the communication apparatus 601 implements the related solution of the vehicle-mounted device in the method that corresponds to any one or more items and that is shown in FIG. 5, the transceiver 603 is configured to: receive transaction voucher information from a first roadside device after a vehicle pays a toll of a road, where the transaction voucher information indicates that the vehicle pays the toll; and send a pass request message to a second roadside device when the vehicle does not pass through a gate of the road and a distance between the vehicle and the gate is less than a first threshold, where the pass request message includes the transaction voucher information; and the processor 602 is configured to stop sending the pass request message to the second roadside device after the vehicle passes through the gate.

When the communication apparatus 601 implements the related solution of the second roadside device in the method that corresponds to any one or more items and that is shown in FIG. 5, the transceiver 603 is configured to receive a pass request message sent by a vehicle, where the pass request message includes transaction voucher information, and the transaction voucher information indicates that the vehicle pays a toll of a road; and the processor 602 is configured to: obtain a determining result indicating that the vehicle does not pass through a gate of the road and a distance between the vehicle and the gate is less than a first threshold; and generate a release control signal based on the transaction voucher information and the determining result, where the release control information is used to enable the vehicle to pass through the gate.

When the communication apparatus 601 implements the related solution of the first roadside device in the method that corresponds to any one or more items and that is shown in FIG. 5, the processor 602 is configured to generate transaction voucher information after a vehicle pays a toll, where the transaction voucher information indicates that the vehicle pays the toll; and the transceiver 603 is configured to send the transaction voucher information to a vehicle-mounted device in the vehicle.

For concepts, explanations, detailed descriptions, and other steps of the communication apparatus that are related to the technical solutions provided in embodiments of this application, refer to the descriptions of the content in the foregoing methods or other embodiments. Details are not described herein again.

According to the foregoing methods, FIG. 7 is a schematic diagram of a structure of a communication apparatus according to an embodiment of this application. As shown in FIG. 7, the communication apparatus 701 may include a communication interface 703, a processor 702, and a memory 704. The communication interface 703 is configured to input and/or output information. The processor 702 is configured to execute a computer program or instructions, so that the communication apparatus 701 implements the method on the roadside unit in the related solution in FIG. 4, or the communication apparatus 701 implements the method on the vehicle-mounted device in the related solution in FIG. 4, or the communication apparatus 701 implements the method on the vehicle-mounted device in the related solution in FIG. 5, or the communication apparatus 701 implements the method on the first roadside device in the related solution in FIG. 5, or the communication apparatus 701 implements the method on the second roadside device in the related solution in FIG. 5. In this embodiment of this application, the communication interface 703 may implement the solution implemented by the transceiver 603 in FIG. 6, the processor 702 may implement the solution implemented by the processor 602 in FIG. 6, and the memory 704 may implement the solution implemented by the memory 604 in FIG. 6. Details are not described herein again.

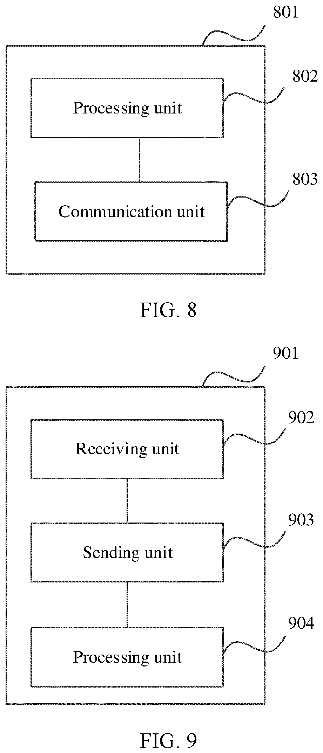

Based on the foregoing embodiments and a same concept, FIG. 8 is a schematic diagram of a communication apparatus according to an embodiment of this application. As shown in FIG. 8, the communication apparatus 801 may be a roadside unit (a road toll apparatus, a first roadside device, or a second roadside device), or may be a chip or a circuit, for example, a chip or a circuit that may be disposed in a road toll apparatus, a first roadside device, or a second roadside device.

The communication apparatus may implement the steps performed by the roadside unit in the method that corresponds to any one or more items and that is shown in FIG. 4. The communication apparatus may correspond to the roadside unit in the method. The communication apparatus may include a processing unit 802 and a communication unit 803. The communication unit 803 is configured to receive a pass request message sent by a vehicle, where the pass request message includes transaction voucher information, and the transaction voucher information indicates that the vehicle pays a toll of a road; and the processing unit 802 is configured to: obtain a determining result indicating that the vehicle does not pass through a gate of the road and a distance between the vehicle and the gate is less than a first threshold; and generate a release control signal based on the transaction voucher information and the determining result, where the release control information is used to enable the vehicle to pass through the gate.

In a possible implementation, before the receiving a pass request message sent by a vehicle, the communication unit 803 is further configured to send the transaction voucher information to the vehicle after the vehicle pays the toll, where the transaction voucher information indicates that the vehicle pays the toll.

In a possible implementation, the pass request message further includes location information of the vehicle, and the communication unit 803 is specifically configured to determine the determining result based on the location information and a location of the gate.

In a possible implementation, the communication unit 803 is specifically configured to determine the determining result based on a sensing result of the vehicle by a sensing device of the roadside unit.

In a possible implementation, the pass request message further includes proximity indication information indicating that the vehicle is to arrive at the gate, and the communication unit 803 is specifically configured to obtain the determining result based on the proximity indication information.

In a possible implementation, the communication unit 803 is further configured to send a release indication message to the vehicle after the release control signal is generated, where the release indication message indicates that the vehicle is released by the gate.

The communication apparatus may implement the steps performed by the first roadside device or the second roadside device in the method that corresponds to any one or more items and that is shown in FIG. 5. The communication apparatus may correspond to the first roadside device or the second roadside device in the method. The communication apparatus may include a processing unit 802 and a communication unit 803.

When the communication apparatus corresponds to the second roadside device in the method, the communication unit 803 is configured to receive a pass request message sent by a vehicle, where the pass request message includes transaction voucher information, and the transaction voucher information indicates that the vehicle pays a toll of a road; and the processing unit 802 is configured to: obtain a determining result indicating that the vehicle does not pass through a gate of the road and a distance between the vehicle and the gate is less than a first threshold; and generate a release control signal based on the transaction voucher information and the determining result, where the release control information is used to enable the vehicle to pass through the gate.

When the communication apparatus corresponds to the first roadside device in the method, the processing unit 802 is configured to generate transaction voucher information after a vehicle pays a toll, where the transaction voucher information indicates that the vehicle pays the toll; and the communication unit 803 is configured to send the transaction voucher information to a vehicle-mounted device in the vehicle.

For concepts, explanations, detailed descriptions, and other steps of the communication apparatus that are related to the technical solutions provided in embodiments of this application, refer to the descriptions of the content in the foregoing methods or other embodiments. Details are not described herein again.

It may be understood that for functions of the units in the communication apparatus 801, refer to implementations of corresponding method embodiments. Details are not described herein again.

It should be understood that division of the units in the communication apparatus is merely logical function division. During actual implementation, all or some of the units may be integrated into one physical entity, or may be physically separated. In this embodiment of this application, the communication unit 803 may be implemented by the transceiver 603 in FIG. 6 or the communication interface 703 in FIG. 7, and the processing unit 802 may be implemented by the processor 602 in FIG. 6 or the processor 702 in FIG. 7.

Based on the foregoing embodiments and a same concept, FIG. 9 is a schematic diagram of a communication apparatus according to an embodiment of this application. As shown in FIG. 9, the communication apparatus 901 may be a vehicle-mounted device, or may be a chip or a circuit, for example, a chip or a circuit that may be disposed in a vehicle-mounted device. The communication apparatus may correspond to the vehicle-mounted device in the foregoing method. The communication apparatus may include a receiving unit 902 and a sending unit 903. Optionally, the communication apparatus further includes a processing unit 904.

The communication apparatus may implement the steps performed by the vehicle-mounted device in the method that corresponds to any one or more items and that is shown in FIG. 4. The receiving unit 902 is configured to receive transaction voucher information from a roadside unit after a vehicle pays a toll of a road, where the transaction voucher information indicates that the vehicle pays the toll. The sending unit 903 is configured to send a pass request message when the vehicle does not pass through a gate of the road and a distance between the vehicle and the gate is less than a first threshold, where the pass request message includes the transaction voucher information. The sending unit 903 is further configured to stop sending the pass request message after the vehicle passes through the gate.

In a possible implementation, the sending unit 903 is specifically configured to periodically send the pass request message.

In a possible implementation, the pass request message further includes location information of the vehicle.

In a possible implementation, the processing unit 904 is specifically configured to obtain, based on a location of the vehicle relative to the gate, a determining result indicating that the vehicle passes through the gate. The sending unit 903 is specifically configured to stop sending the pass request message based on the determining result.

In a possible implementation, the receiving unit 902 is further configured to receive a release indication message from the roadside unit, where the release indication message indicates that the vehicle is released by the gate. The sending unit 903 is specifically configured to stop sending the pass request message based on the release indication message.

The communication apparatus may implement the steps performed by the vehicle-mounted device in the method that corresponds to any one or more items and that is shown in FIG. 5. The communication apparatus may correspond to the vehicle-mounted device in the method. The receiving unit 902 is configured to receive transaction voucher information from a first roadside device after a vehicle pays a toll of a road, where the transaction voucher information indicates that the vehicle pays the toll. The sending unit 903 is configured to send a pass request message to a second roadside device when the vehicle does not pass through a gate of the road and a distance between the vehicle and the gate is less than a first threshold, where the pass request message includes the transaction voucher information. The sending unit 903 is further configured to stop sending the pass request message to the second roadside device after the vehicle passes through the gate.

In a possible implementation, the sending unit 903 is specifically configured to periodically send the pass request message to the second roadside device.

In a possible implementation, the pass request message further includes location information of the vehicle.

In a possible implementation, the processing unit 904 is specifically configured to obtain, based on a location of the vehicle relative to the gate, a determining result indicating that the vehicle passes through the gate. The sending unit 903 is specifically configured to stop sending the pass request message to the second roadside device based on the determining result.

In a possible implementation, the receiving unit 902 is further configured to receive a release indication message from the roadside unit, where the release indication message indicates that the vehicle is released by the gate. The sending unit 903 is specifically configured to stop sending the pass request message to the second roadside device based on the release indication message.

For concepts, explanations, detailed descriptions, and other steps of the communication apparatus that are related to the technical solutions provided in embodiments of this application, refer to the descriptions of the content in the foregoing methods or other embodiments. Details are not described herein again.

It may be understood that for functions of the units in the communication apparatus 901, refer to implementations of corresponding method embodiments. Details are not described herein again.

It should be understood that division of the units in the communication apparatus is merely logical function division. During actual implementation, all or some of the units may be integrated into one physical entity, or may be physically separated. In this embodiment of this application, the receiving unit 902 and the sending unit 903 may be implemented by the transceiver 603 in FIG. 6 or the communication interface 703 in FIG. 7, and the processing unit 904 may be implemented by the processor 602 in FIG. 6 or the processor 702 in FIG. 7.

According to the methods provided in embodiments of this application, this application further provides a computer program product. The computer program product includes computer program code or instructions. When the computer program code or the instructions is/are run on a computer, the computer is enabled to perform the method in any one of the embodiments shown in FIG. 4 or FIG. 5.

According to the methods provided in embodiments of this application, this application further provides a computer-readable storage medium. The computer-readable medium stores program code. When the program code is run on a computer, the computer is enabled to perform the method in any one of the embodiments shown in FIG. 4 or FIG. 5.

According to the methods provided in embodiments of this application, this application further provides a chip system. The chip system may include a processor. The processor is coupled to a memory, and may be configured to perform the method in the embodiment shown in FIG. 4 or FIG. 5. Optionally, the chip system further includes the memory. The memory is configured to store a computer program (which may also be referred to as code or instructions). The processor is configured to invoke the computer program from the memory and run the computer program, so that a device in which the chip system is installed performs the method in any one of the embodiments shown in FIG. 4 or FIG. 5.

According to the methods provided in embodiments of this application, this application further provides a system. The system includes the road toll apparatus of the roadside unit and the vehicle, where a vehicle-mounted terminal is disposed in the vehicle; or includes the first roadside device, the second roadside device, and the vehicle, where a vehicle-mounted terminal is disposed in the vehicle.

All or some of the foregoing embodiments may be implemented by software, hardware, firmware, or any combination thereof. When software is used to implement embodiments, all or some of embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

It should be noted that a part of this patent application document includes copyright-protected content. The copyright owner reserves the copyright except copies are made for the patent documents or the recorded content of the patent documents in the China National Intellectual Property Administration.

The roadside unit (or the first roadside device or the second roadside device) and the vehicle-mounted device in the foregoing apparatus embodiments correspond to the roadside unit (or the first roadside device or the second roadside device) and the vehicle-mounted device in the method embodiments. A corresponding module or unit performs a corresponding step. For example, a communication unit (a transceiver) performs a receiving or sending step in the method embodiments, and a processing unit (a processor) may perform a step other than the sending and receiving step. For a function of a specific unit, refer to a corresponding method embodiment. There may be one or more processors.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on a signal having one or more data packets (for example, data from two components interacting with another component in a local system, in a distributed system, and/or across a network such as the Internet interacting with another system by using a signal).

A person of ordinary skill in the art may be aware that, in combination with illustrative logical blocks (illustrative logical blocks) described in embodiments disclosed in this specification and steps (steps), this application may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions in embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer or a server) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A road toll method, comprising:
receiving, by a vehicle-mounted device in a vehicle, transaction voucher information from a roadside unit after the vehicle pays a toll of a road, wherein the transaction voucher information indicates that the vehicle pays the toll;
sending, by the vehicle-mounted device, a pass request message when the vehicle does not pass through a gate of the road and a distance between the vehicle and the gate is less than a first threshold, wherein the pass request message comprises the transaction voucher information; and
stopping, by the vehicle-mounted device, sending the pass request message after the vehicle passes through the gate.

2. The method according to claim 1, wherein the sending, by the vehicle-mounted device, a pass request message comprises:
periodically sending, by the vehicle-mounted device, the pass request message.

3. The method according to claim 1 or 2, wherein the pass request message further comprises location information of the vehicle.

4. The method according to any one of claims 1 to 3, wherein the stopping, by the vehicle-mounted device, sending the pass request message comprises:
obtaining, by the vehicle-mounted device based on a location of the vehicle relative to the gate, a determining result indicating that the vehicle passes through the gate; and
stopping, by the vehicle-mounted device, sending the pass request message based on the determining result.

5. The method according to any one of claims 1 to 3, wherein the stopping, by the vehicle-mounted device, sending the pass request message comprises:
receiving, by the vehicle-mounted device, a release indication message from the roadside unit, wherein the release indication message indicates that the vehicle is released by the gate; and
stopping, by the vehicle-mounted device, sending the pass request message based on the release indication message.

6. A road toll method, comprising:
receiving a pass request message sent by a vehicle, wherein the pass request message comprises transaction voucher information, and the transaction voucher information indicates that the vehicle pays a toll of a road;
obtaining a determining result indicating that the vehicle does not pass through a gate of the road and a distance between the vehicle and the gate is less than a first threshold; and
generating a release control signal based on the transaction voucher information and the determining result, wherein the release control information is used to enable the vehicle to pass through the gate.

7. The method according to claim 6, wherein before the receiving a pass request message sent by a vehicle, the method further comprises:
sending the transaction voucher information to the vehicle after the vehicle pays the toll, wherein the transaction voucher information indicates that the vehicle pays the toll.

8. The method according to claim 6 or 7, wherein the pass request message further comprises location information of the vehicle, and the obtaining a determining result indicating that the vehicle does not pass through a gate of the road and a distance between the vehicle and the gate is less than a first threshold comprises:
determining the determining result based on the location information and a location of the gate.

9. The method according to claim 6 or 7, wherein the obtaining a determining result indicating that the vehicle does not pass through a gate of the road and a distance between the vehicle and the gate is less than a first threshold comprises:
determining the determining result based on a sensing result of the vehicle by a sensing device of the roadside unit.

10. The method according to claim 6 or 7, wherein the pass request message further comprises proximity indication information indicating that the vehicle is to arrive at the gate, and the obtaining a determining result indicating that the vehicle does not pass through a gate of the road and a distance between the vehicle and the gate is less than a first threshold comprises:
obtaining the determining result based on the proximity indication information.

11. The method according to any one of claims 6 to 10, wherein after the generating a release control signal, the method further comprises:
sending a release indication message to the vehicle, wherein the release indication message indicates that the vehicle is released by the gate.

12. A vehicle-mounted device, comprising:
a receiving unit, configured to receive transaction voucher information from a roadside unit after a vehicle pays a toll of a road, wherein the transaction voucher information indicates that the vehicle pays the toll; and
a sending unit, configured to send a pass request message when the vehicle does not pass through a gate of the road and a distance between the vehicle and the gate is less than a first threshold, wherein the pass request message comprises the transaction voucher information, wherein
the sending unit is further configured to stop sending the pass request message after the vehicle passes through the gate.

13. The device according to claim 12, wherein the sending unit is specifically configured to:
periodically send the pass request message.

14. The device according to claim 12 or 13, wherein the pass request message further comprises location information of the vehicle.

15. The device according to any one of claims 12 to 14, wherein the vehicle-mounted device further comprises a processing unit, configured to obtain, based on a location of the vehicle relative to the gate, a determining result indicating that the vehicle passes through the gate; and the sending unit is specifically configured to:
stop sending the pass request message based on the determining result.

16. The device according to any one of claims 12 to 14, wherein the receiving unit is further configured to:
receive a release indication message from the roadside unit, wherein the release indication message indicates that the vehicle is released by the gate; and
the sending unit is specifically configured to stop sending the pass request message based on the release indication message.

17. A road toll apparatus, comprising:
a communication unit, configured to receive a pass request message sent by a vehicle, wherein the pass request message comprises transaction voucher information, and the transaction voucher information indicates that the vehicle pays a toll of a road; and
a processing unit, configured to: obtain a determining result indicating that the vehicle does not pass through a gate of the road and a distance between the vehicle and the gate is less than a first threshold; and generate a release control signal based on the transaction voucher information and the determining result, wherein the release control information is used to enable the vehicle to pass through the gate.

18. The apparatus according to claim 17, wherein before the receiving a pass request message sent by a vehicle, the communication unit is further configured to:
send the transaction voucher information to the vehicle after the vehicle pays the toll, wherein the transaction voucher information indicates that the vehicle pays the toll.

19. The apparatus according to claim 17 or 18, wherein the pass request message further comprises location information of the vehicle, and the processing unit is specifically configured to:
determine the determining result based on the location information and a location of the gate.

20. The apparatus according to claim 17 or 18, wherein the processing unit is specifically configured to:
determine the determining result based on a sensing result of the vehicle by a sensing device of the roadside unit.

21. The apparatus according to claim 17 or 18, wherein the pass request message further comprises proximity indication information indicating that the vehicle is to arrive at the gate, and the processing unit is specifically configured to:
obtain the determining result based on the proximity indication information.

22. The apparatus according to any one of claims 17 to 21, wherein the communication unit is further configured to:
send a release indication message to the vehicle after the release control signal is generated, wherein the release indication message indicates that the vehicle is released by the gate.

23. A vehicle-mounted device, comprising a processor and a memory, wherein the memory is configured to store computer-executable instructions, and the processor executes the computer-executable instructions to implement the method according to any one of claims 1 to 5.

24. A road toll apparatus, comprising a processor and a memory, wherein the memory is configured to store computer-executable instructions, and the processor executes the computer-executable instructions to implement the method according to any one of claims 6 to 11.

25. A road toll apparatus, comprising a processor and a communication interface, wherein
the communication interface is configured to input and/or output information; and
the processor is configured to execute a computer program, so that the method according to any one of claims 1 to 5 is performed, or the method according to any one of claims 6 to 11 is performed.

26. A computer-readable storage medium, wherein the computer-readable storage medium stores a computer program, and when the computer program is run, the method according to any one of claims 1 to 5 is implemented, or the method according to any one of claims 6 to 11 is implemented.

27. A computer program product, wherein the computer program product comprises a computer program or instructions, and when the computer program or the instructions is/are executed by a processor, the method according to any one of claims 1 to 5 is implemented, or the method according to any one of claims 6 to 11 is implemented.

28. A vehicle, wherein the vehicle comprises the vehicle-mounted device according to any one of claims 12 to 16 and 23.

29. A road toll system, comprising a vehicle-mounted device and a road toll apparatus, wherein the vehicle-mounted device is configured to perform the method according to any one of claims 1 to 5, and the road toll apparatus is configured to perform the method according to any one of claims 6 to 11.
